# EUROPÄISCHE PATENTANMELDUNG

(11) **EP 2 143 980 A2**
(43) Veröffentlichungstag der Anmeldung: **13.01.2010**
(21) Anmeldenummer: 09163066.5
(22) Anmeldetag: 18.06.2009
(51) Int. Cl.: F16H 63/20, F16H 63/34

(54) **Anordnung zum Wählen und Schalten von Gängen bei einem Schaltgetriebe eines Fahrzeuges**

(30) Priorität: 07.07.2008 DE 102008040207
(71) Anmelder: ZF Friedrichshafen AG, 88038 Friedrichshafen (DE)
(72) Erfinder: Giessner, Andreas, 88045 Friedrichshafen (DE); Acker, Andreas, 88074 Meckenbeuren (DE)

(57) **Zusammenfassung**

Es wird eine Anordnung zum Wählen und Schalten von Gängen bei einem Schaltgetriebe eines Fahrzeuges mit einer Schaltvorrichtung vorgeschlagen, welche eine Schaltwelle (1), die mit einer Wähleinrichtung zum Diehen der Schaltwelle (1) und mit einer Schalteinrichtung zum axialen Verschieben der Schaltwelle (1) gekoppelt ist, und zumindest eine Rastiereinrichtung zum Blockieren und Freigeben von Schaltschwingen oder Schaltgabeln (2, 3, 4, 5) umfasst, wobei die Schaltvorrichtung als vormontierbare Baueinheit ausgebildet ist.

## Beschreibung

Die vorliegende Erfindung betrifft eine Anordnung zum Wählen und Schalten von Gängen bei einem Schaltgetriebe eines Fahrzeuges gemäß der im Oberbegriff des Patentanspruches 1 näher definierten Art.

Beispielsweise aus der Druckschrift DE 43 42 957 A1 ist eine Schaltvorrichtung für die Schaltungsbetätigung von Mehrstufengetrieben von Kraftfahrzeugen bekannt. Die Schaltvorrichtung umfasst eine Schaltstange, welche drehbar und in axialer Richtung verschiebbar in einem Getriebegehäuse gelagert ist. Auf der Schaltstange sind Koppeleinrichtungen angeordnet, die eine Verbindung zwischen der Schaltstange und den Schaltgabeln oder Schaltschwingen herstellen. Zum Wählen eines Ganges wird die Schaltstange um einen bestimmten Winkel gedreht, so dass eine ausgewählte Schaltschwinge/Schaltgabel angesteuert wird, welche durch einen Arretierbolzen mit der Schaltstange axial fest verbunden wird. Gleichzeitig werden die nicht gewählten Schaltschwingen/Schaltgabein relativ zu der Schaltstange am Getriebegehäuse fixiert, so dass die Schaltstange axial gegenüber den nicht gewähren Schaltschwingen/Schaltgabeln verschiebbar ist. Zur Gangschaltung wird die ausgewählte Schaltschwinge/Schaltgabel über eine Mitnahmeeinrichtung mit der Schaltstange betätigt, indem die Schaltschwinge/Schaltgabel aufgrund der axialen Bewegung der Schaltstange um die durch Bolzen festgelegte Drehachse am Getriebegehäuse gedreht wird, um einen Gangwechsel in bekannter Weise über Gleitsteine durchzuführen.

Bei der bekannten Schaltvorrichtung sind die Schaltschwingen/Scha!tgabeln schwenkbar in dem Getriebegehäuse gelagert. Zudem wird die Fixierung der nicht gewählten Schaltschwingen/Schaltgabeln über das Getriebegehäuse realisiert, indem die Arretierbolzen der nicht gewählten Schaltschwingen/Schaltgabeln in zugeordneten Ausnehmungen des Getriebegehäuses fixiert sind. Somit ist eine spezielle Gestaltung des Getriebegehäuses für das Aufnehmen der bekannten Schaltvorrichtung erforderlich. Zudem wird bei der bekannten Schaltvorrichtung aufgrund der Vielzahl der einzelnen Bauteile keine kompakte Bauweise realisiert. Es ist auch keine Vormontage der Schaltvorrichtung unabhängig von dem Getriebe möglich.

Der vorliegenden Erfindung liegt die Aufgabe zu Grunde, eine Anordnung der eingangs beschriebenen Gattung vorzuschlagen, welche eine besonders kompakt aufgebaute und bauraumsparende Schaltvorrichtung realisiert,

Diese Aufgabe wird erfindungsgemäß durch die Merkmale des Patentanspruches 1 gelöst, Weitere vorleilhafte Ausgestaltungen ergeben sich aus den Unteransprüchen und den Zeichnungen.

Demnach wird eine Anordnung zum Wählen und Schalten von Gängen bei einem Schaltgetriebe eines Fahrzeuges mit einer Schaltvorrichtung vorgeschlagen, welche eine Schaltwelle, die mit einer Wähleinrichtung zum Drehen der Schaltwelle und mit einer Schalteinrichtung zum axialen Verschieben der Schaltwelle gekoppelt ist, und zumindest eine Rastiereinrichtung zum Blockieren und Freigeben von Schaltschwingen oder Schaltgabel umfasst, wobei die Schaltvorrichtung als vormontiertbare Baueinheit oder dergleichen ausgebildet ist.

Auf diese Weise wird eine aktuierte Einwellenschaltung für ein Fahrzeug mit einem Schaltgetriebe vorgeschlagen, mit der ein Schalten und Wählen von Gängen bei dem Getriebe über eine einzige Schaltwelle ermöglicht wird, wobei zu dem Mittel vorgesehen sind, mit denen die nicht zu schadende Gänge beziehungsweise nicht angewählte Schaltschwingen oder Schaltgabeln gesperrt werden. Aufgrund der erfindungsgemäßen Ausgestaltung als eigenständige Einheit kann eine Vormontage erfolgen und auf einen Radsatz des Getriebes aufgesetzt und mit dem Getriebegehäuse auf einfachste Weise verbunden, z.B. verschraubt werden. Besondere Ausgestaltungen sind an dem Getriebegehäuse für die erfindungsgemäße Anordnung in vorteilhafter Weise nicht erforderlich.

Eine mögliche Ausgestaltung der Erfindung kann vorsehen, dass die Baueinheit eine gemeinsame Lagereinrichtung für die Schaltwelle und eine zentrale Rastierungsschiene oder dergleichen der Rastiereinrichtung umfasst. Vorzugsweise können als Lagereinrichtung mehrere Lager oder dergleichen zur Lagerung der Schaltwelle vorgesehen sein, wobei die Lager jeweils in Lagerblöcken oder dergleichen zur Aufnahme der zentralen Rastierungsschiene montiert sind. Auf diese Weise kann eine sehr kompakte Anordnung von Schaltwelle und Rastierungsschiene ermöglicht werden. Die Lagerblöcke können z. B. über Befestigungsbolzen oder dergleichen mit einem Gehäuse der Anordnung, der Wähleinrichtung und der Schalteinrichtung verbunden sein, Somit bildet die gesamte Konstruktion eine eigenständige Einheit, die komplett vormontiert werden kann.

Im Rahmen einer möglichen Ausführungsvariante der Erfindung können an der Schaltwelle mehrere Schaltschwingen oder Schaltgabel angeordnet sein, an denen jeweils ein Rastiergehäuse oder dergleichen der Rastiereinrichtung befestigt ist, welches jeweils einen federbelasteten Rastbolzen umfasst, der mit einem ersten Ende gegen den Umfangsbereich der Schaltwelle vorgespannt ist und mit dem zweiten Ende in einer Ausnehmung oder dergleichen der Rastierungsschiene zum Blockieren der axialen Bewegungsrichtung der jeweiligen Schaltschwinge/Schaltgabel angeordnet ist, Somit ergibt sich auch eine kompakte Ausführung der Rastiereinrichtung quasi zwischen der Schaltwelle und der Rastierungsschiene, Die Rastiergehäuse können zum Beispiel mittels Schrauben oder dergleichen an den jeweiligen Schaltschwingen/Schaltgabeln befestigt sein. Vorzugsweise kann die Federvorspannung der Rastbolzen durch eine Druckfeder oder dergleichen realisiert werden. Dabei kann sich die Druckfeder zum einen in dem Rastiergehäuse und zum anderen an einem entsprechenden Aufnahmebereich des Rastbolzens abstützen, um diesen gegen den äußeren Umfang der Schaltwelle zu drücken.

Um das Wählen einer der Schaltschwingen/Schaltgabeln zu ermöglichen, kann gemäß einer Weiterbildung der Erfindung vorgesehen sein, dass die Schaltwelle zur Längsachse mehrere Quernuten oder dergleichen aufweist, die einen rotatorischen Versatz zueinander aufweisen und jeweils einer Schaltschwinge/Schaltgabel zugeordnet sind, so dass, wenn ein Rastbolzen in der zugeordneten Quernut der Schaltwelle mit seinem ersten Ende durch die Federkraft der Druckfeder eintaucht, das zweite Ende des Rastbolzen aus der Ausnehmung der Rastierungsschiene austritt und somit in axialer Bewegungsrichtung die gewählte Schaltschwinge/Schaltgabel zum Schalten des gewählten Ganges freigibt. Dabei ist die Länge des Rastbolzens so gewählt, dass das zweite Ende des Rastbolzens einer gewählten Schaltschwinge/Schaltgabel nicht mehr in der Ausnehmung der Rastierungsschiene fixiert ist, wenn das erste Ende in der Quernut der Schaltwelle aufgenommen ist. Es sind auch andere konstruktive Ausführungen der Rastiereinrichtung denkbar, um jeweils die nicht gewählten Schaltschwingen/Schaltgabeln zu fixieren.

Für das Schalten beziehungsweise das Betätigen der gewählten Schaltschwinge/Schaltgabel durch die Schaltwelle kann beispielsweise vorgesehen sein, dass der rotatorischen Versatz der Quernuten an der Schaltwelle so gewählt ist, dass nur ein Rastbolzen in der zugeordneten Quernut der Schaltwelle eintaucht, während die anderen Rastbolzen in dieser Position jeweils in ihren zugeordneten Ausnehmungen in der zentralen Rastierungsschiene angeordnet sind. Dadurch sind die nicht gewählten Schaltschwingen/Schaltgabeln an der Rastierungsschiene fixiert und können nicht bei einer axialen Bewegung der Schaltwelle betätigt werden.

Um die gesamte Anordnung möglichst kompakt zu gestalten, kann die Wähleinrichtung einem ersten Ende der Schaltwelle und die Schalteinrichtung einem zweiten Ende der Schaltwelle zugeordnet sein. Es sind auch andere Anordnungsmöglichkeiten denkbar. Vorzugsweise kann die Wähleinrichtung einen Drehantrieb mit einer Antriebswelle umfassen, die über eine Übersetzungsstufe oder dergleichen mit der Schaltwelle gekoppelt ist. Als Drehantrieb kann zum Beispiel ein Elektromotor oder dergleichen vorgesehen sein, der über seine Antriebswelle ein Zahnrad antreibt, welches wiederum mit einem weiteren Zahnrad an dem zugeordneten Ende der Schaltwelle in Eingriff steht und somit die Übersetzungsstufe bildet. Es sind auch andere Kopplungsmöglichkeiten zwischen dem Drehantrieb und der Schaltwelle denkbar.

Gemäß einer weiteren Ausgestaltung der Erfindung kann die Schalteinrichtung einen Antrieb mit einem Spindeltrieb oder dergleichen umfassen, der ebenfalls mit der Schaltwelle gekoppelt ist, um die axiale Bewegung der Schaltwelle zum Einlegen eines Ganges zu ermöglichen. Der Spindeltrieb kann eine, z.B. durch einen Elektromotor dergleichen, antreibbare Spindel mit einer axial bewegbaren durch Bolzen verdrehgesicherte Spindelmutter aufweisen, die mit der Schaltwelle zum axialen Bewegen gekoppelt ist. Es ist auch denkbar, dass andere Mittel zum Umsetzen einer rotatorischen Bewegung des Antriebes in eine translatorische Bewegung der Schaltwelle eingesetzt werden.

Nachfolgend wird die Erfindung anhand der Zeichnungen weiter erläutert. Es zeigen:
Fig. 1 eine geschnittene Ansicht einer möglichen Ausführungsvariante einer Schaltvorrichtung einer Anordnung zum Wählen und Schalten von Gängen bei einem Schaltgetriebe eines Fahrzeuges entlang einer Schnittlinie A-A;
Fig. 2 eine geschnittene Ansicht der Schaltvorrichtung entlang einer Schnittlinie B-B;
Fig. 3 eine vergrößerte Ansicht eines Details X gemäß Figur 1;
Fig. 4 eine geschnittene Ansicht der Schaltvorrichtung entlang einer Schnittlinie C-C;
Fig. 5 eine geschnittene Ansicht der Schaltvorrichtung entlang einer Schnittlinie D-D;
Fig. 6 eine geschnittene Ansicht der Schaltvorrichtung entlang einer Schnittlinie E-E; und
Fig. 7 eine geschnittene Ansicht der Schaltvorrichtung entlang einer Schnittlinie F-F.

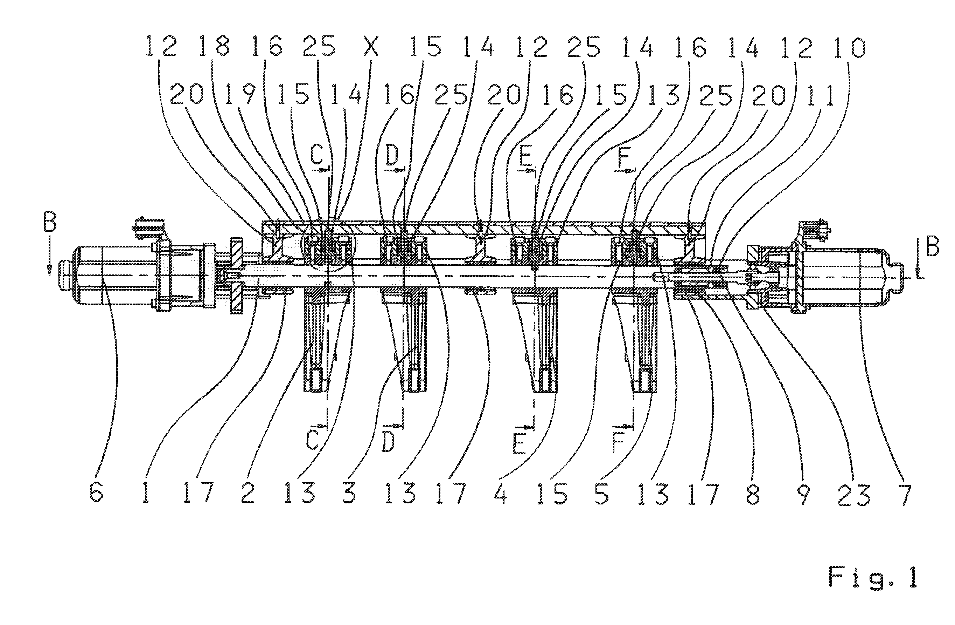

In den Figuren 1 bis 7 sind verschiedene Ansichten einer möglichen Ausführungsvariante einer erfindungsgemäßen Anordnung zum Wählen und schalten von Gängen bei einem Schaltgetriebe eines Fahrzeuges dargestellt, wobei das Schaltgetriebe nicht gezeigt ist. Gleiche beziehungsweise ähnliche Bauteile sind mit denselben Bezugszeichen versehen.

Die erfindungsgemäße Anordnung umfasst eine Schaltvorrichtung, welche eine Schaltwelle 1 zum Wählen und Schalten von gewünschten Gängen aufweist, an der beispielhaft vier Schaltschwingen bzw. Schaltgabeln 2, 3, 4, 5 gelagert sind, mit denen jeweils durch eine axiale Bewegung in bekannter Weise Gänge geschaltet werden können. Die Schaltvorrichtung umfasst eine Wähleinrichtung zum Drehen der Schaltwelle 1 und eine Schalteinrichtung zum axialen Verschieben der Schaltwelle 1. Ferner umfasst die Schaltvorrichtung eine Rastiereinrichtung zum Blockieren und Freigegeben der Schaltschwingen/Schaltgabeln 2, 3, 4, 5.

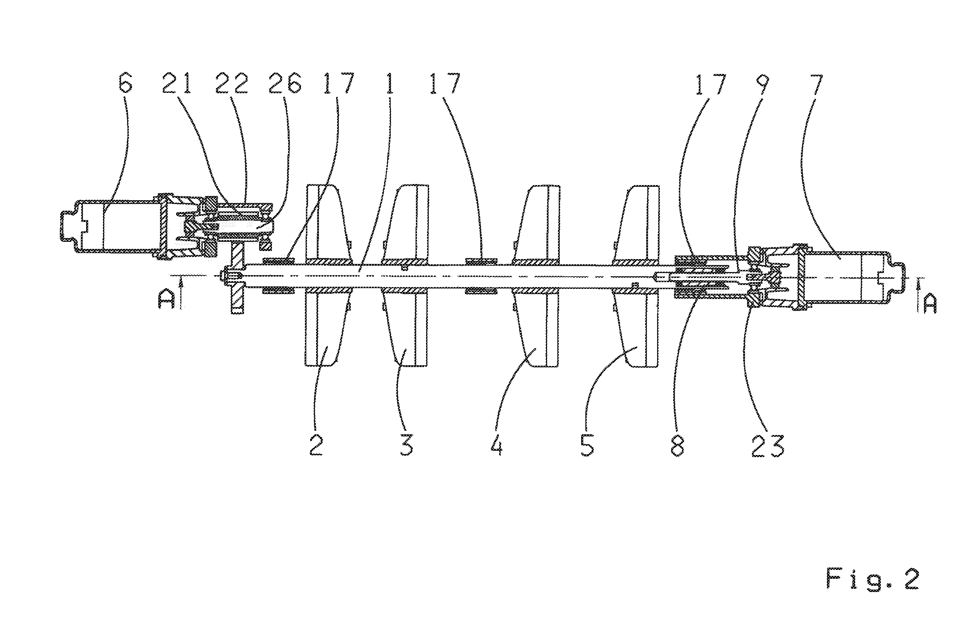

Erfindungsgemäßen ist die Schaltvorrichtung bei der vorgeschlagenen Anordnung als vormontierbare Baueinheit ausgebildet, da die Schaltvorrichtung besonders kompakt aufgebaut ist, welches insbesondere aus Figur 1 und 2 ersichtlich ist. Dies wird insbesondere dadurch erreicht, dass die Schaltwelle 1 und eine zentrale Rastierungsschiene 18 der Rastiereinrichtung parallel nebeneinander angeordnet sind und über eine gemeinsame Lagereinrichtung gehalten werden. Die Lagereinrichtung weist mehrere Lager 17 zur Lagerung der Schaltwelle 1 auf, wobei die Lager 17 jeweils in Lagerblöcken 12 zur Aufnahme der zentralen Rastierungsschiene 18 montiert sind. Die Lagerböcke 12 sind über Befestigungsbolzen 20 mit einem Gehäuse 19 der Schaltvorrichtung und mit einem Wählgehäuse 22 der Wähleinrichtung sowie mit einem Schaltgehäuse 23 der Schalteinrichtung fest verbunden. Dadurch bildet die gesamte Konstruktion eine eigenständige Einheit, die komplett vormontiert auf den, nicht weiter dargestellten Radsatz des Getriebes aufgesetzt und mit dem Getriebegehäuse, welches ebenfalls nicht gezeigt ist, verschraubt werden kann.

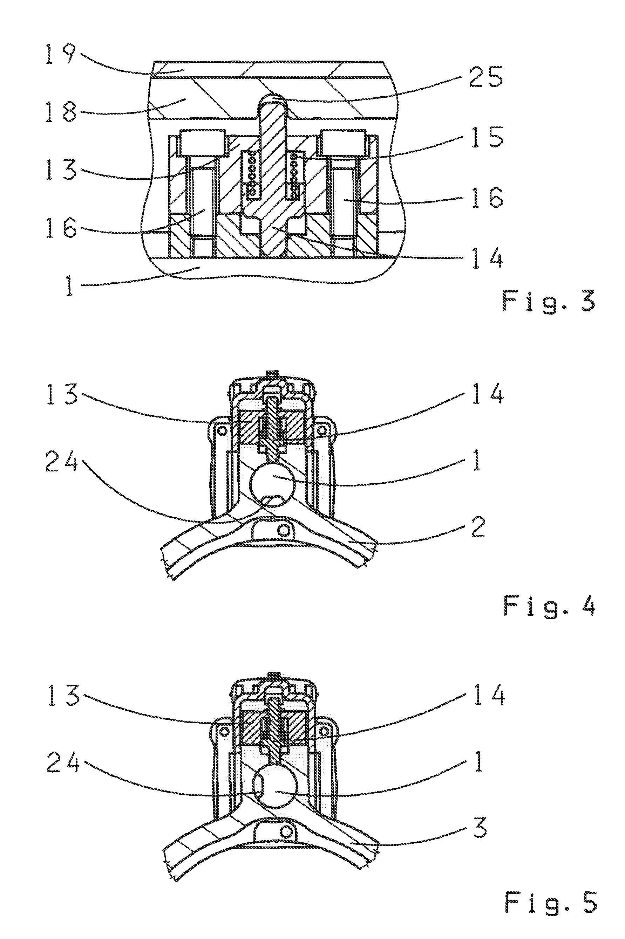

Die Rastiereinrichtung umfasst die zentrale Rastierungsschiene 18 und jeweils den einzelnen Schaltschwingen/Schaltgabeln 2, 3, 4, 5 zugeordneten Rastiergehäuse 13, die mit Schrauben 16 an den jeweiligen Schaltschwingen/Schaltgabeln 2, 3, 4, 5 befestigt sind. Jedes Rastiergehäuse 13 nimmt einen Rastbolzen 14 und eine Druckfeder 15 auf. Jede Druckfeder 15 stützt sich zum einen an dem Rastiergehäuse 13 und an einem Aufnahmebereich des Rastbolzens 14 ab, wie dies insbesondere aus Figur 3 ersichtlich ist. Somit wird der Rastbolzen 14 mit einem ersten Ende mittels der Druckfeder 15 gegen den Umfangsbereich der Schaltwelle 1 gedrückt beziehungsweise vorgespannt, wobei ein zweites Ende des jeweiligen Rastbolzen 14 in einer zugeordneten Ausnehmung beziehungsweise Nut 25 in der Rastierungsschiene 18 angeordnet ist.

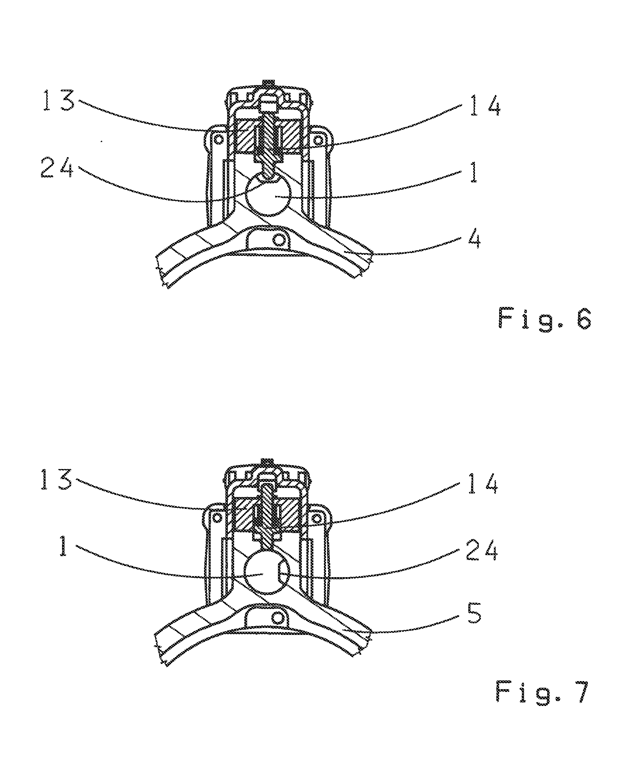

In der Schaltwelle sind zur Hauptachse beziehungsweise Längsachse vier Quernuten 24 vorgesehen, welche jeweils einer Schaltschwinge/Schaltgabel 2, 3, 4, 5 zugeordnet sind. Die Quernuten 24 weisen einen rotatorischen Versatz auf, welcher so ausgeführt ist, dass immer nur ein Rastbolzen 14 in eine Quernut 24 eintauchen kann. Dies ist insbesondere aus den Figuren 1 und 6 ersichtlich. Die anderen Rastbolzen 14 werden aufgrund der nicht vorhandenen Quernut an dieser Stelle der Schaltwelle 1 in die jeweils zugeordnete Ausnehmung 25 der zentralen Rastierungsschiene 18 gedrückt. Dies ist insbesondere aus den Figuren 1, 4, 5 und 7 ersichtlich. Demzufolge ist der axiale Verfahrenweg der Schaltschwingen/Schaltgabeln 2, 3, 5 in der beispielhaft dargestellten Stellung blockiert und nur die Schaltschwinge/Schaltgabel 4 ist zum Schalten freigegeben und kann mit der Schaltwelle 1 in axialer Richtung mit bewegt werden, um den gewünschten Gang zu schalten.

Durch das Verdrehen der Schaltwelle 1 kann eine beliebige Schaltschwinge/Schaltgabel 2, 3, 4, 5 bei der Schaltvorrichtung angewählt werden. Die Drehbewegung wird durch die Wähleinrichtung realisiert, welche einem ersten Ende der Schaltwelle 1 zugeordnet ist. Die Wähleinrichtung umfasst einen ansteuerbaren Drehantrieb 6 mit einer Antriebswelle 26, deren Drehbewegung über eine Übersetzungsstufe 21 direkt auf die Schaltwelle 1 übertragen wird.

Das zweite Ende der Schaltwelle 1 ist der Schalteinrichtung zugeordnet. Die Schalteinrichtung umfasst ebenfalls einen ansteuerbaren Antrieb 7, der einen Spindeltrieb antreibt. Der Spindeltrieb umfasst eine Spindel 9 und eine axial bewegbare Spindelmutter 8, welche durch Bolzen 11 verdrehgesichert und mit der Schaltwelle 1 verbunden ist. Durch die axiale Bewegung der Spindelmutter wird die Schaltwelle 1 und die durch den Rastbolzen 14 verbundene beziehungsweise gewählte Schaltschwinge/Schaltgabel 4 axial mit bewegt.

Um mögliche Schläge beim Einlegen der jeweiligen Schaltschwinge/Schaltgabel 2, 3, 4, 5 auf den Spindeltrieb und den ansteuerbaren Antrieb 7 beziehungsweise die Dreheinheit zu minimieren, sind vor und hinter der Spindelmutter 8 Dämpfungspakete 10 montiert. Die Dämpfungspakete 10 können auch an anderen Positionen vorgesehen werden. Zudem ist es möglich, dass weitere Dämpfungspakete 10 zusätzlich verwendet werden.

### Bezugszeichen

- 1: Schaltwelle
- 2: Schaltschwinge beziehungsweise Schaltgabel
- 3: Schaltschwinge beziehungsweise Schaltgabel
- 4: Schaltschwinge beziehungsweise Schaltgabel
- 5: Schaltschwinge beziehungsweise Schaltgabel
- 6: ansteuerbarer Drehantrieb
- 7: ansteuerbaren Antrieb
- 8: Spindelmutter
- 9: Spindel
- 10: Dämpfungspaket
- 11: Bolzen
- 12: Lagerbock
- 13: Rastiergehäuse
- 14: Rastbolzen
- 15: Druckfeder
- 16: Schraube
- 17: Lager
- 18: zentrale Rastierungsschiene
- 19: Gehäuse
- 20: Befestigungsbolzen
- 21: Übersetzungsstufe
- 22: Wählgehäuse
- 23: Schaltgehäuse
- 24: Quernut
- 25: Ausnehmung beziehungsweise Nut
- 26: Antriebswelle

## Patentansprüche

1. Anordnung zum Wählen und Schalten von Gängen bei einem Schaltgetriebe eines Fahrzeuges, mit einer Schaltvorrichtung, welche eine Schaltwelle (1), die mit einer Wähleinrichtung zum Drehen der Schaltwelle (1) und mit einer Schalteinrichtung zum axiaien Verschieben der Schaltwelle (1) gekoppelt ist, und zumindest eine Rastiereinrichtung zum Blockieren und Freigeben von Schaltschwingen oder Schaltgabeln (2, 3, 4, 5) umfasst, **dadurch gekennzeichnet, dass** die Schaltvorrichtung als vormontierbare Baueinheit ausgebildet ist.

2. Anordnung nach Anspruch 1, **dadurch gekennzeichnet, dass** die Baueinheit eine gemeinsame Lagereinrichtung für die Schaltwelle (1) und eine zentrale Rastierungsschiene (18) der Rastiereinrichtung umfasst.

3. Anordnung nach Anspruch 2, **dadurch gekennzeichnet, dass** die Lagereinrichtung mehrere Lager (17) zur Lagerung der Schaltwelle (1) aufweist, wobei die Lager (17) jeweils in Lagerblöcken (12) zur Aufnahme der zentralen Rastierungsschiene (18) montiert sind.

4. Anordnung nach Anspruch 3, **dadurch gekennzeichnet, dass** die Lagerblöcke (12) mit einem Gehäuse (19), der Wähleinrichtung und der Schalteinrichtung verbunden sind.

5. Anordnung nach einem der vorangehenden Ansprüche, **dadurch gek ennzeichnet, dass** an der Schaltwelle (1) mehrere Schaltschwingen/Schaltgabeln (2, 3, 4, 5) angeordnet sind, an denen jeweils ein Rastiergehäuse (13) befestigt ist, welches jeweils einen federbelasteten Rastbolzen (14) umfasst, der mit einem ersten Ende gegen den Umfangsbereich der Schaltwelle (1) vorgespannt ist und mit dem zweiten Ende in einer Ausnehmung (25) der Rastierungsschiene (18) zum Blockieren der axialen Bewegungsrichtung der jeweiligen Schaltschwinge/Schaltgabel (2, 3, 4, 5) angeordnet ist.

6. Anordnung nach Anspruch 5, **dadurch gekennzeichnet, dass** die Schaltwelle (1) zur Längsachse mehrere Quernuten (24) aufweist, die einen rotatorischen Versatz zueinander aufweisen und jeweils einer Schaltschwinge/Schaltgabel (2, 3, 4, 5) zugeordnet sind, so dass, wenn ein Rastbolzen (14) in der zugeordneten Quernut (24) der Schaltwelle (1) mit seinem ersten Ende durch die Federkraft einer Druckfeder (15) eintaucht, das zweite Ende des Rastbolzens (14) aus der Ausnehmung (25) der Rastierungsschiene (18) austritt und somit in axialer Bewegungsrichtung die gewählte Schaltschwinge/Schaltgabel (2, 3, 4, 5) zum Schalten des gewähren Ganges freigibt.

7. Anordnung nach Anspruch 6, **dadurch gekennzeichnet, dass** der rotatorische Versatz der Quernuten (24) so gewählt ist, dass nur ein Rastbolzen (14) in der zugeordneten Quernut (24) der Schaltwelle (1) eintaucht, während die anderen Rastbolzen (14) in dieser Position jeweils in ihren zugeordneten Ausnehmungen (25) in der zentralen Rastierungsschiene (18) angeordnet sind.

8. Anordnung nach einem der vorangehenden Ansprüche, **dadurch gekennzeichnet, dass** die Wähleinrichtung einem ersten Ende der Schaltwelle (1) und die Schalteinrichtung einem zweiten Ende der Schaltwelle (1) zugeordnet sind.

9. Anordnung nach Anspruch 8, **dadurch gekennzeichnet, dass** die Wähieinrichtung einen ansteuerbaren Drehantrieb (6) mit einer Antriebswelle (26) umfasst, die über eine Übersetzungsstufe (21) mit der Schaltwelle (1) gekoppelt ist.

10. Anordnung nach Anspruch 8 oder 9, **dadurch gekennzeichne t, dass** die Schalteinrichtung einen ansteuerbaren Antrieb (7) mit einem Spindeltrieb umfasst, der mit der Schaltwelle (1) gekoppelt ist.

11. Anordnung nach Anspruch 10, **dadurch gekennzeichnet, dass** der Spindeltrieb eine antreibbare Spindel (9) mit einer Spindelmutter (8), welche durch Bolzen (11) verdrehgesichert und mit der Schaltwelle (1) zum axialen Bewegen gekoppelt ist.
